# EUROPEAN PATENT SPECIFICATION

(11) **EP 2 724 113 B1**
(45) Date of publication and mention of the grant of the patent: **25.04.2018**
(21) Application number: 12839117.4
(22) Date of filing: 20.06.2012
(51) Int. Cl.: F41H 5/04, E04H 9/04, B32B 27/08, B32B 27/40, E04H 9/06, E04H 9/14, F42D 5/045

(54) **POLYCARBONATE LAMINATE FOR CLOSE-PROXIMITY BLAST EVENTS**
POLYCARBONATLAMINAT FÜR NÄHERUNGSEXPLOSIONSEREIGNISSE
STRATIFIÉ DE POLYCARBONATE POUR ÉVÉNEMENTS EXPLOSIFS À PROXIMITÉ IMMÉDIATE

(30) Priority: 21.06.2011 US 201161499256 P
(43) Date of publication of application: 30.04.2014
(73) Proprietor: Covestro LLC, Pittsburgh, PA 15205 (US)
(72) Inventor: LORENZO, James M., Mars, PA 16046 (US); PYLES, Robert A., Bethel Park, PA 15102 (US)
(74) Representative: Levpat
(86) International application number: PCT/US2012/043262
(87) International publication number: WO 2013/052182

(56) References cited:
- EP-A1- 0 967 453
- WO-A1-94/01732
- WO-A2-03/058149
- WO-A2-2005/062932
- WO-A2-2009/149951
- FR-B1- 2 887 489
- US-A- 3 657 057
- US-A- 4 663 228
- US-A1- 2003 221 547
- US-A1- 2007 011 962
- US-A1- 2007 111 621
- US-A1- 2009 169 855
- US-B2- 7 300 893

## Description

The present invention relates in general to blast and ballistic protection and more specifically to a polycarbonate laminate useful for protection against close-proximity blast and severe storm events.

Ahmad, in U.S. Pat. No. 7,562,613, provides a protective structure for protecting buildings, bridges, roads and other areas from explosive devices such as car bombs and the like made of: (a) a mesh structure having an outer surface and an inner surface, wherein the inner surface defines an annular space; (b) a plurality of structural steel cables in contact with the mesh structure; (c) a composite fill material which resides within the annular space of the mesh structure and within the mesh structure; (d) at least one reinforcement member which resides within the composite fill material; and (e) a composite face material which resides upon the outer surface of the mesh structure. The mesh structure may be made up of, for example, steel wire. The described protective system for protecting buildings, bridges, roads and other areas from explosive devices such as car bombs etc. may be made from a plurality of the described protective structures and a plurality of support members, wherein the support members provide interlocking engagement of the protective structures to the support members.

U.S. Pat. No. 8,011,146, issued to Krause describes a blast-proof window and mullion system for sustaining and mitigating an explosion and/or blast to the window and mullion system on a multi-storied building or structure. The window and mullion system is detailed as including a blast-resistant mullion having a mullion housing with mullion walls with outer surfaces; and a pressure bar member having a pressure bar housing with an interior wall and a pair of outer walls being connected to the interior wall to form a center channel opening. The outer walls are said to be angled for reducing the space between the angled walls and for reducing the size of the center channel opening for reduction of bullet and/or blast penetration to the interior wall of the pressure bar member. Also, one of the mullion walls of the mullion housing is said to include a mullion tongue thereon having a pair of tongue extension arms for forming a vertical bolt receiving channel there between. Each of the tongue extension arms has interior serrated surfaces for receiving threaded bolts between the interior serrated surfaces. The interior wall of the pressure bar member has a pair of spaced-apart pressure bar extension arms thereon. The interior wall of the pressure bar member includes a plurality of spaced-apart bolt openings for receiving a plurality of the threaded bolts therein for permanently locking together the pressure bar extension arms with the mullion extension arms in order to join together and lock the pressure bar housing of the pressure bar member to said mullion housing of the blast-resistant mullion to form the blast-proof window and mullion system.

A need continues to exist in the art for improved protective systems for close-proximity blast and severe storm events.

Accordingly, the present invention provides such improved protective systems for close-proximity blast and severe storm events as claimed in the appended claims. The improved protective systems comprise a polycarbonate laminate that can protect an object against 50 lbs. to 100 lbs. of trinitrotoluene-equivalent from distances as close as about 3 feet (0.91 m). The improved polycarbonate laminate of the present invention comprises polycarbonate layers laminated with one or more thermoplastic polyurethane ("TPU") interlayers to achieve a final laminate thickness in the range of about 4 inches (10.2 cm) to about 6 inches (15.2 cm). The inventive protective systems can be used either directly against a concrete wall (depending on construction) or optionally with an about 2 feet (0.61 m) to about 4 feet (1.22 m) air gap standoff from building. The inventive laminate and protective systems made with it can provide improved protection from close-proximity blast and severe storm events, such as hurricanes, cyclones, typhoons and tornados.

These and other advantages and benefits of the present invention will be apparent from the Detailed Description of the Invention herein below.

The present invention will now be described for purposes of illustration and not limitation in conjunction with the figures, wherein:
Figures 1A and 1B show a model blast protective system;
Figure 2 shows the target point for a blast or ballistic event on a model blast protective system;
Figure 3 illustrates the standoff distance from the blast event to the target;
Figures 4A-4D show the predicted damage for a 3 inch (7.62 cm) nominal polycarbonate sheet laminate having one thermoplastic polyurethane layer between the polycarbonate sheets using 100 lbs. (45.4 kg) of trinitrotoluene-equivalent detonated at a distance of one foot (0.305 m);
Figures 5A-5D shows the predicted damage for a 4.5 inch (11.4 cm) nominal polycarbonate sheet laminate having one thermoplastic polyurethane layer between the each of the polycarbonate sheets using 50 lbs. (22.7 kg) of trinitrotoluene-equivalent detonated at a distance of five feet (1.52 m);
Figures 6A and 6B illustrate a laminate and concrete wall quarter-symmetry model;
Figures 7A and 7B provide a comparison of subjecting an 18 inch (0.475 m) unreinforced concrete wall to a simulated 50 lbs. (22.7 kg) of trinitrotoluene-equivalent detonated at a distance of five feet (1.52 m), with Figure 7A showing an unprotected wall and Figure 7B showing a wall protected by the inventive laminate and a 24 inch (0.61 m) air gap;
Figures 8A-8F illustrate the deflection prediction for the wall protected by a three polycarbonate sheet laminate having one thermoplastic polyurethane layer between the each of the polycarbonate sheets, and a 24 inch (0.61 m) air gap;
Figures 9A-9F illustrate the air gap pressure for a wall protected by a three polycarbonate sheet laminate having one thermoplastic polyurethane layer between the each of the polycarbonate sheets, and a 24 inch (0.61 m) air gap;
Figures 10A-10H illustrate the concrete wall strain for a walls that are subjected to a simulated 50 lbs. (22.7 kg) of trinitrotoluene-equivalent detonated at a distance of five feet (1.52 m);
Figures 11A-11F illustrate subjecting an 18 inch (0.475 m) unreinforced concrete wall to a simulated 50 lbs. (22.7 kg) of trinitrotoluene-equivalent detonated at a distance of 4 feet (1.22 m), with the wall protected by a three polycarbonate sheet laminate having one thermoplastic polyurethane layer between the each of the polycarbonate sheets, and a 24 inch (0.61 m) air gap;
Figures 12A-12F illustrate the air gap pressure for the wall protected by the laminate as shown in Figures 11A-11F;
Figures 13A-13D illustrate the concrete wall strain for an 18 inch (0.475 m) unreinforced concrete wall that is subjected to a simulated 50 lbs. (22.7 kg) of trinitrotoluene-equivalent detonated at a distance of 4 feet (1.22 m), with the wall protected by a three polycarbonate sheet laminate having one thermoplastic polyurethane layer between the each of the polycarbonate sheets, and a 24 inch (0.61 m) air gap.
Figures 14A-14F show the deflection prediction of subjecting an 18 inch (0.475 m) unreinforced concrete wall to a simulated 50 lbs. (22.7 kg) of trinitrotoluene-equivalent detonated at a distance of three feet (0.914 m), with the wall protected by a three polycarbonate sheet laminate having one thermoplastic polyurethane layer between the each of the polycarbonate sheets and no air gap.

The present invention will now be described for purposes of illustration and not limitation. Except in the operating examples, or where otherwise indicated, all numbers expressing quantities, percentages, OH numbers, functionalities and so forth in the specification are to be understood as being modified in all instances by the term "about." Equivalent weights and molecular weights given herein in Daltons (Da) are number average equivalent weights and number average molecular weights respectively, unless indicated otherwise.

The present invention provides a laminate for protecting an object against one of a close-proximity blast and a severe storm event, the laminate comprising two or more layers of polycarbonate having layered therebetween one or more layers of a thermoplastic polyurethane, wherein the laminate is about 4 inches (10.2 cm) to about 6 inches (15.2 cm) in thickness.

The laminate can be part of a protective system for one of a close-proximity blast and a severe storm event.
The present invention yet further provides a method for protecting an object from one of a close-proximity blast and a severe storm event, the method involving placing between the object and the blast and storm event, a laminate comprising two or more layers of polycarbonate having layered therebetween one or more layers of a thermoplastic polyurethane, wherein the laminate is about 4 inches (10.2 cm) to about 6 inches (15.2 cm) in thickness and wherein the laminate is placed at a standoff of about 2 feet (0.61 m) to about 4 feet (1.22 m) from the object.

The present invention still further provides a method of protecting an object against 50 lbs. (22.7 kg) to 100 lbs. (45.4 kg) of trinitrotoluene-equivalent detonated at a distance of about 3 feet (0.914 m), the method involving placing between the object and the 50 lbs. to 100 lbs. of trinitrotoluene-equivalent, a laminate comprising two or more layers of polycarbonate having layered there between one or more layers of a thermoplastic polyurethane.

Suitable polycarbonate resins for preparing the laminates of the present invention are homopolycarbonates and copolycarbonates, both linear or branched resins and mixtures thereof.

The polycarbonates have a weight average molecular weight of preferably 10,000 to 200,000, more preferably 20,000 to 80,000 and their melt flow rate, per ASTM D-1238 at 300°C, is preferably 1 to 65 g/10 min., more preferably 2 to 35 g/10 min. They may be prepared, for example, by the known diphasic interface process from a carbonic acid derivative such as phosgene and dihydroxy compounds by polycondensation (*See,* German Offenlegungsschriften 2,063,050; 2,063,052; 1,570,703; 2,211,956; 2,211,957 and 2,248,817; French Patent 1,561,518; and the monograph by H. Schnell, "Chemistry and Physics of Polycarbonates", Interscience Publishers, New York, New York, 1964).

In the present context, dihydroxy compounds suitable for the preparation of the polycarbonates of the invention conform to the structural formulae (1) or (2) below. 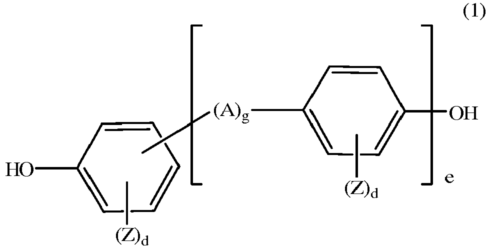 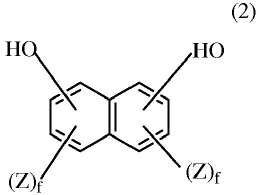 wherein
- A: denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, a sulfur atom, -SO- or -SO₂ or a radical conforming to 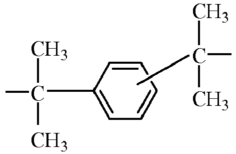
e and g both denote the number 0 to 1;
- Z: denotes F, Cl, Br or C₁-C₄-alkyl and if several Z radicals are substituents in one aryl radical, they may be identical or different from one another;
- d: denotes an integer of from 0 to 4; and
- f: denotes an integer of from 0 to 3.

Among the dihydroxy compounds useful in the practice of the invention are hydroquinone, resorcinol, bis-(hydroxyphenyl)-alkanes, bis-(7droxyl-phenyl)-ethers, bis-(hydroxyphenyl)-ketones, bis-(7ydroxyl-phenyl)-sulfoxides, bis-(hydroxyphenyl)-sulfides, bis-(hydroxyphenyl)-sulfones, and α,α-bis-(hydroxyphenyl)-diisopropylbenzenes, as well as their nuclear-alkylated compounds. These and further suitable aromatic dihydroxy compounds are described, for example, in U.S. Pat. Nos. 5,401,826, 5,105,004; 5,126,428; 5,109,076; 5,104,723; 5,086,157; 3,028,356; 2,999,835; 3,148,172; 2,991,273; 3,271,367; and 2,999,846, the contents of which are incorporated herein by reference.

Further examples of suitable bisphenols are 2,2-bis-(4-hydroxyphenyl)-propane (bisphenol A), 2,4-bis-(4-hydroxyphenyl)-2-methyl-butane, 1,1-bis-(4-hydroxyphenyl)-cyclohexane, α,α'-bis-(4-hydroxy-phenyl)-p-diisopropylbenzene, 2,2-bis-(3-methyl-4-hydroxyphenyl)-propane, 2,2-bis-(3-chloro-4-hydroxyphenyl)-propane, 4,4'-dihydroxy- diphenyl, bis-(3,5-dimethyl-4-hydroxyphenyl)-methane, 2,2-bis-(3,5-dimethyl-4-hydroxyphenyl)-propane, bis-(3,5-dimethyl-4-hydroxyphenyl)-sulfide, bis-(3,5-dimethyl-4-hydroxy-phenyl)-sulfoxide, bis-(3,5-dimethyl-4-hydroxyphenyl)-sulfone, dihydroxy-benzophenone, 2,4-bis-(3,5-dimethyl-4-hydroxyphenyl)-cyclohexane, α,α'-bis-(3,5-dimethyl-4-hydroxyphenyl)-p-diisopropyl-benzene and 4,4'-sulfonyl diphenol.

Examples of particularly preferred aromatic bisphenols are 2,2-bis- (4-hydroxyphenyl)-propane, 2,2-bis-(3,5-dimethyl-4-hydroxyphenyl)-propane, 1,1-bis-(4-hydroxyphenyl)-cyclohexane and 1,1-bis-(4-hydroxy-phenyl)-3,3,5-trimethylcyclohexane. The most preferred bisphenol is 2,2-bis-(4-hydroxyphenyl)-propane (bisphenol A).

The polycarbonates useful in producing the sheets for the laminates of the invention may entail in their structure units derived from one or more of the suitable bisphenols.
Among the resins suitable in the practice of the invention are phenolphthalein-based polycarbonate, copolycarbonates and terpolycarbonates such as are described in U.S. Pat. Nos. 3,036,036 and 4,210,741. The polycarbonates useful in preparing the sheets laminates of the invention may also be branched by condensing therein small quantities, e.g., 0.05 to 2.0 mol % (relative to the bisphenols) of polyhydroxyl compounds. Polycarbonates of this type have been described, for example, in German Offenlegungsschriften 1,570,533; 2,116,974 and 2,113,374; British Patents 885,442 and 1,079,821 and U.S. Pat. No. 3,544.514. The following are some examples of polyhydroxyl compounds which may be used for this purpose: phloroglucinol; 4,6-dimethyl-2,4,6-tri-(4-hydroxy-phenyl)-heptane; 1,3,5-tri-(4-hydroxyphenyl)-benzene; 1,1,1-tri-(4-hydroxyphenyl)-ethane; tri-(4-hydroxyphenyl)-phenyl-methane; 2,2-bis-[4,4-(4,4'-dihydroxydiphenyl)]-cyclohexyl-propane; 2,4-bis-(4-hydroxy-1-isopropylidine)-phenol; 2,6-bis-(2'-dihydroxy-5'-methylbenzyl)-4-methyl-phenol; 2,4-dihydroxybenzoic acid; 2-(4-hydroxy-phenyl)-2-(2,4-dihydroxy-phenyl)-propane and 1,4-bis-(4,4'-dihydroxytri-phenylmethyl)-benzene. Some of the other polyfunctional compounds are 2,4-dihydroxy-benzoic acid, trimesic acid, cyanuric chloride and 3,3-bis-(4-hydroxyphenyl)-2-oxo-2,3-dihydroindole.

In addition to the polycondensation process mentioned above, other processes for the preparation of the polycarbonates of the invention are polycondensation in a homogeneous phase and transesterification. The suitable processes are disclosed in U.S. Pat. Nos. 3,028,365; 2,999,846; 3,153,008; and 2,991,273. The preferred process for the preparation of polycarbonates is the interfacial polycondensation process. Other methods of synthesis in forming the polycarbonates of the invention, such as disclosed in U.S. Pat. No. 3,912,688, may be used. Suitable polycarbonate materials are available in commerce, for instance, from Bayer MaterialScience under the MAKROLON and HYGARD trademarks. The polycarbonate is preferably used in the form of sheets or films in the inventive laminates.

Aliphatic thermoplastic polyurethanes are particularly preferred in the laminates of the present invention such as those prepared according to U.S. Pat. No. 6,518,389, the entire contents of which are incorporated herein by reference.

Thermoplastic polyurethane elastomers are well known to those skilled in the art. They are of commercial importance due to their combination of high-grade mechanical properties with the known advantages of cost-effective thermoplastic processability. A wide range of variation in their mechanical properties can be achieved by the use of different chemical synthesis components. A review of thermoplastic polyurethanes, their properties and applications is given in Kunststoffe [Plastics] 68 (1978), pages 819 to 825, and in Kautschuk, Gummi, Kunststoffe [Natural and Vulcanized Rubber and Plastics] 35 (1982), pages 568 to 584.

Thermoplastic polyurethanes are synthesized from linear polyols, mainly polyester diols or polyether diols, organic diisocyanates and short chain diols (chain extenders). Catalysts may be added to the reaction to speed up the reaction of the components.

The relative amounts of the components may be varied over a wide range of molar ratios in order to adjust the properties. Molar ratios of polyols to chain extenders from 1:1 to 1:12 have been reported. These result in products with hardness values ranging from 80 Shore A to 75 Shore D.

Thermoplastic polyurethanes can be produced either in stages (prepolymer method) or by the simultaneous reaction of all the components in one step (one shot). In the former, a prepolymer formed from the polyol and diisocyanate is first formed and then reacted with the chain extender. Thermoplastic polyurethanes may be produced continuously or batch-wise. The best-known industrial production processes are the so-called belt process and the extruder process.

Examples of the suitable polyols include difunctional polyether polyols, polyester polyols, and polycarbonate polyols. Small amounts of trifunctional polyols may be used, yet care must be taken to make certain that the thermoplasticity of the thermoplastic polyurethane remains substantially uneffected.

Suitable polyester polyols include those which are prepared by polymerizing ε-caprolactone using an initiator such as ethylene glycol, ethanolamine and the like. Further suitable examples are those prepared by esterification of polycarboxylic acids. The polycarboxylic acids may be aliphatic, cycloaliphatic, aromatic and/or heterocyclic and they may be substituted, e.g., by halogen atoms, and/or unsaturated. The following are mentioned as examples: succinic acid; adipic acid; suberic acid; azelaic acid; sebacic acid; phthalic acid; isophthalic acid; trimellitic acid; phthalic acid anhydride; tetrahydrophthalic acid anhydride; hexahydrophthalic acid anhydride; tetrachlorophthalic acid anhydride, endomethylene tetrahydrophthalic acid anhydride; glutaric acid anhydride; maleic acid; maleic acid anhydride; fumaric acid; dimeric and trimeric fatty acids such as oleic acid, which may be mixed with monomeric fatty acids; dimethyl terephthalates and bis-glycol terephthalate. Suitable polyhydric alcohols include, e.g., ethylene glycol; propylene glycol-(1,2) and -(1,3); butylene glycol-(1,4) and -(1,3); hexanediol-(1,6); octanediol-(1,8); neopentyl glycol; (1,4-bis-hydroxy-methylcyclohexane); 2-methyl-1,3-propanediol; 2,2,4-tri-methyl-1,3-pentanediol; triethylene glycol; tetraethylene glycol; polyethylene glycol; dipropylene glycol; polypropylene glycol; dibutylene glycol and polybutylene glycol, glycerine and trimethlyolpropane.

Suitable polyisocyanates for producing the thermoplastic polyurethanes useful in the laminates of the present invention may be, for example, organic aliphatic diisocyanates including, for example, 1,4-tetramethylene diisocyanate, 1,6-hexamethylene diisocyanate, 2,2,4-trimethyl-1,6-hexamethylene diisocyanate, 1,12-dodecamethylene diisocyanate, cyclohexane-1,3- and -1,4-diisocyanate, 1-isocyanato-2-isocyanatomethyl cyclopentane, 1-isocyanato-3-isocyanatomethyl-3,5,5-trimethyl-cyclohexane (isophorone diisocyanate or IPDI), bis-(4-isocyanatocyclohexyl)-methane, 2,4'-dicyclohexylmethane diisocyanate, 1,3- and 1,4-bis-(isocyanatomethyl)-cyclohexane, bis-(4-isocyanato-3-methylcyclohexyl)-methane, α,α,α',α'-tetramethyl-1,3- and/or -1,4-xylylene diisocyanate, 1-isocyanato-1-methyl-4(3)-isocyanatomethyl cyclohexane, 2,4- and/or 2,6-hexahydrotoluylene diisocyanate, and mixtures thereof.

Preferred chain extenders with molecular weights of 62 to 500 include aliphatic diols containing 2 to 14 carbon atoms, such as ethanediol, 1,6-hexanediol, diethylene glycol, dipropylene glycol, and 1,4-butanediol in particular, for example. However, diesters of terephthalic acid with glycols containing 2 to 4 carbon atoms are also suitable, such as terephthalic acid-bis-ethylene glycol or -1,4-butanediol for example, or hydroxyalkyl ethers of hydroquinone, such as 1,4-di-(β-hydroxyethyl)-hydroquinone for example, or (cyclo)aliphatic diamines, such as isophorone diamine, 1,2- and 1,3-propylenediamine, N-methyl-propylenediamine-1,3 or N,N'-dimethylethylenediamine, for example, and aromatic diamines, such as toluene 2,4- and 2,6-diamines, 3,5-diethyltoluene 2,4- and/or 2,6-diamine, and primary ortho-, di-, tri- and/or tetraalkyl-substituted 4,4'-diaminodiphenylmethanes, for example. Mixtures of the aforementioned chain extenders may also be used. Optionally, triol chain extenders having a molecular weight of 62 to 500 may also be used. Moreover, customary monofunctional compounds may also be used in small amounts, e.g., as chain terminators or demolding agents. Alcohols such as octanol and stearyl alcohol or amines such as butylamine and stearylamine may be cited as examples.

To prepare the thermoplastic polyurethanes, the synthesis components may be reacted, optionally in the presence of catalysts, auxiliary agents and/or additives, in amounts such that the equivalent ratio of NCO groups to the sum of the groups which react with NCO, particularly the OH groups of the low molecular weight diols/triols and polyols, is 0.9:1.0 to 1.2:1.0, preferably 0.95:1.0 to 1.10:1.0.

Suitable catalysts include tertiary amines which are known in the art, such as triethylamine, dimethyl-cyclohexylamine, N-methylmorpholine, N,N'-dimethyl-piperazine, 2-(dimethyl-aminoethoxy)-ethanol, diazabicyclo-(2,2,2)-octane and the like, for example, as well as organic metal compounds in particular, such as titanic acid esters, iron compounds, tin compounds, e.g., tin diacetate, tin dioctoate, tin dilaurate or the dialkyltin salts of aliphatic carboxylic acids such as dibutyltin diacetate, dibutyltin dilaurate or the like. The preferred catalysts are organic metal compounds, particularly titanic acid esters and iron and/or tin compounds.

In addition to difunctional chain extenders, small quantities of up to about 5 mol. Percent, based on moles of the bifunctional chain extender used, of trifunctional or more than trifunctional chain extenders may also be used.

Trifunctional or more than trifunctional chain extenders of the type in question are, for example, glycerol, trimethylolpropane, hexanetriol, pentaerythritol and triethanolamine.

Suitable thermoplastic polyurethanes are available in commerce, for example, from Bayer MaterialScience under the TEXIN trademark. The thermoplastic polyurethanes are preferably used in the present invention in the form of films or sheets.

The thickness of the laminate of the present invention is 4 inches (10.2 cm) to 6 inches (15.2 cm), more preferably 4 inches (10.2 cm) to 5 inches (12.7 cm). The thickness of the laminate of the present invention may be in an amount ranging between any combination of these values, inclusive of the recited values. Optionally, the inventive laminate may be placed at a standoff of 2 feet (0.61 m) to 4 feet (1.22 m), more preferably 3 feet (0.91 m) to 4 feet (1.22 m) from the object (such as a building or other structure) to be protected to introduce an "air gap" between the laminate and the structure and thereby provide additional protection against the blast or severe storm event. The standoff distance of the inventive laminate from the object to be protected may be in an amount ranging between any combination of these values, inclusive of the recited values. Although the laminate of the present invention is most often illustrated in the present disclosure as a three polycarbonate/two thermoplastic polyurethane material, those skilled in the art will recognize that any number and combination of layers is possible depending upon the level of protection desired.

### EXAMPLES

The present invention is further illustrated, but is not to be limited, by the following examples. The following materials were used in modeling the illustrated blast protective systems:

| | |
|---|---|
| POLYCARBONATE SHEETS | 4 foot x 8 foot (1.22 m x 2.44 m) sheets, commercially available from Bayer MaterialScience under the trademark MAKROLON; |
| TPU FILM | thermoplastic polyurethane film commercially available from Bayer MaterialScience under the trademark TEXIN. |

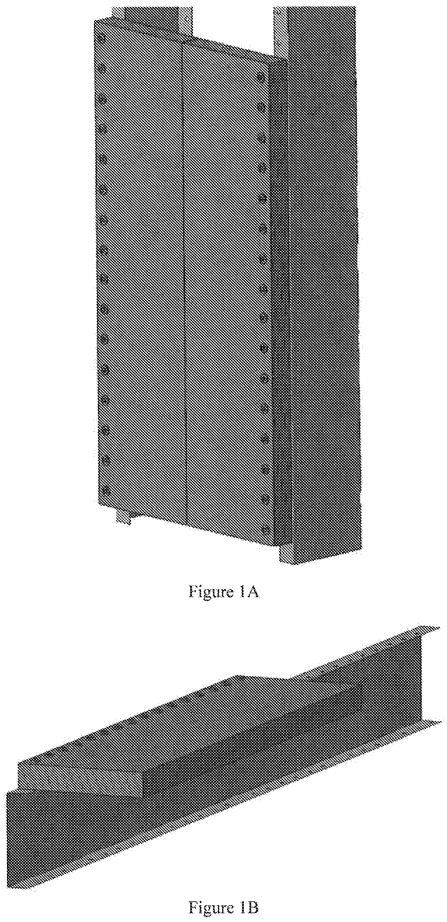

A blast protective system is shown in Figures 1A and 1B. Briefly, the system comprises two metal columns, laminated panel and attachment bolts (Figure 1A). For simplicity, either a half-symmetry or quarter-symmetry model was used as shown in Figure 1B. The laminates depicted in the present disclosure were solved with ABAQUS/Explicit (Acoustic incident wave approach for airborne shock loading using a reflected pressure history profile) software commercially available from Dassualt Systemes Simulia Corp.

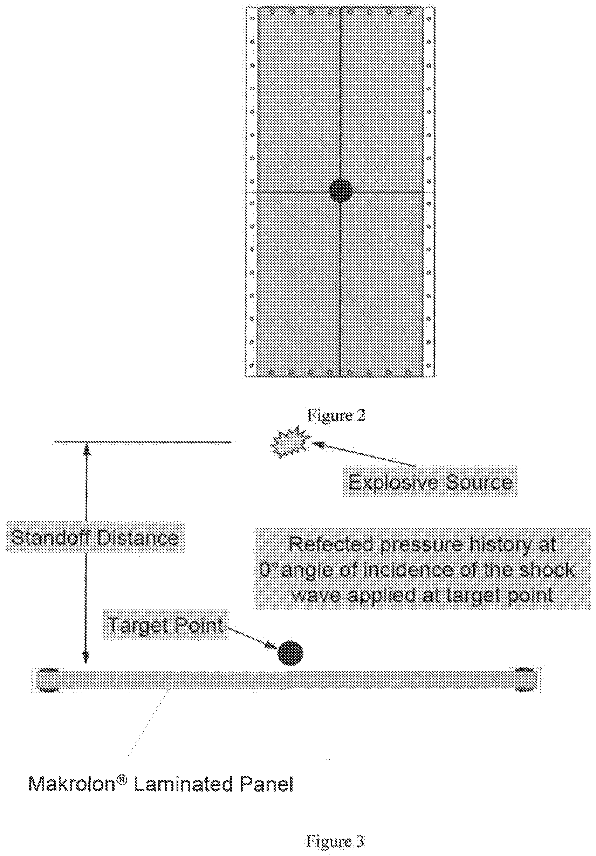

Figure 2 shows the target point for a blast or ballistic event on a model blast protective system. The charge was located at the center of the panel.

Figure 3 illustrates the standoff distance from the blast event to the target. As can be appreciated by reference to Figure 3, the explosive source was located at the center of the panel and offset perpendicularly from the plane of the panel by various distances. A reflected pressure vs. time history was used as input for various charge size and standoff distance combinations.

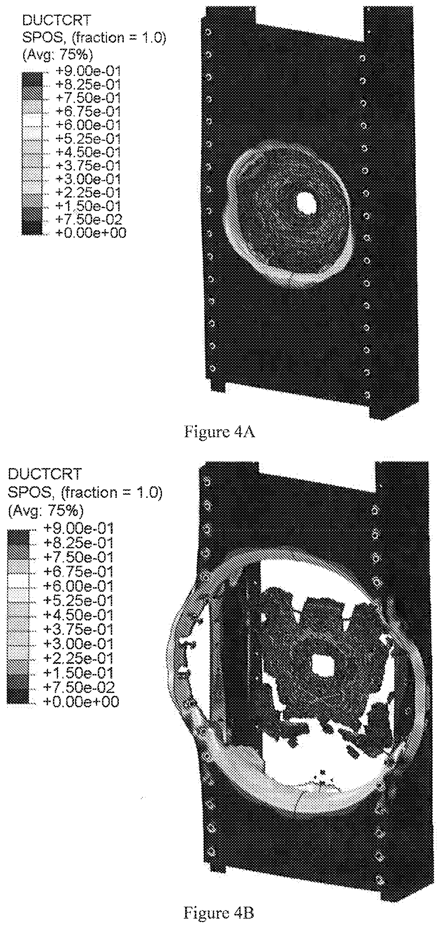

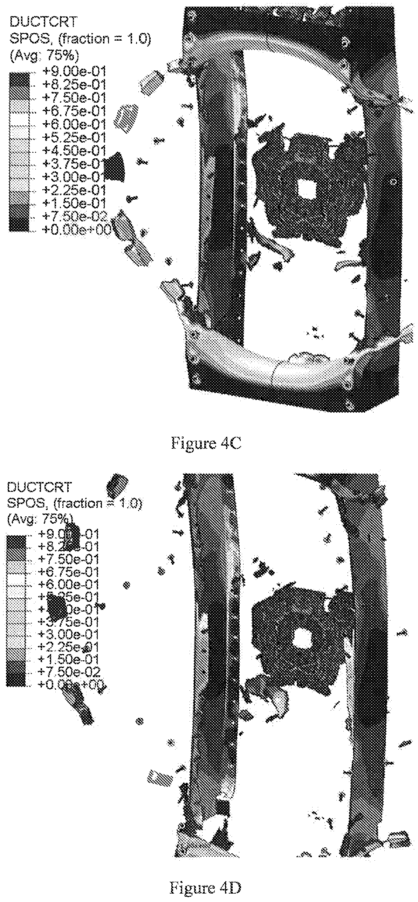

Figures 4A-4D show the predicted damage for a 3 inch (7.62 cm) nominal polycarbonate sheet laminate having one thermoplastic polyurethane layer between the polycarbonate sheets using 100 lbs. (45.4 kg) of trinitrotoluene-equivalent detonated at a distance of one foot (0.305 m) at one millisecond after the detonation (Fig. 4A), two milliseconds (Fig. 4B), three milliseconds (Fig. 4C) and four milliseconds (Fig. 4D). As can be appreciated by reference to Figures 4A-4D, the devastating effects of a near-proximity or contact charge require special counter-measures to protect against breach of the panel.

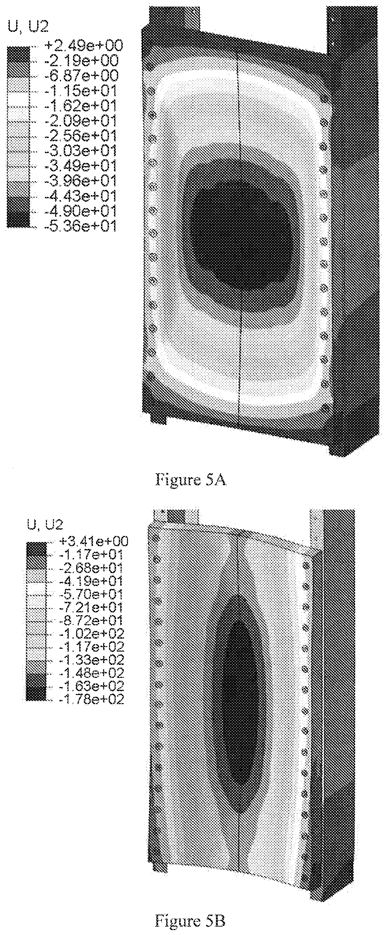

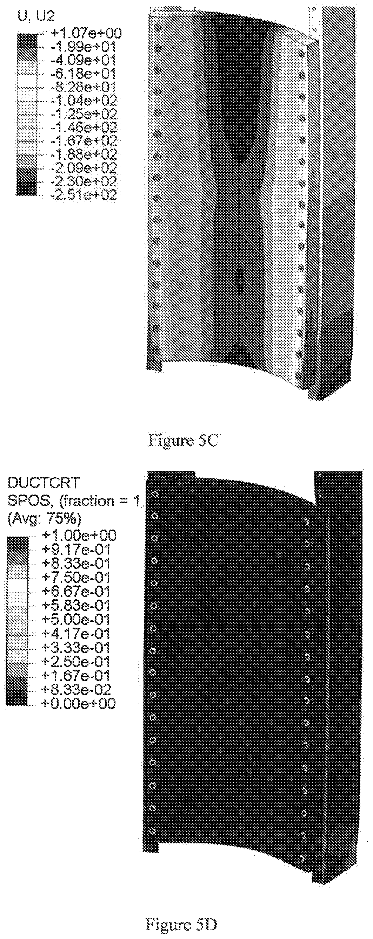

Figures 5A-5D show the predicted damage for a 4.5 inch (11.4 cm) nominal polycarbonate sheet laminate having one thermoplastic polyurethane layer between the each of the polycarbonate sheets using 50 lbs. (22.7 kg) of trinitrotoluene-equivalent detonated at a distance of five feet (1.52 m). Figure 5A shows the deflection at 1.4 milliseconds, Figure 5B at 4.2 milliseconds and Figure 5C at 8.4 milliseconds. Figure 5D shows the damage at 11 milliseconds. As can be appreciated by reference to Figures 5A-5D, the thicker panel is predicted to successfully mitigate the blast pressure, deflect inward by 250 mm but only sustains minor damage at the bolt holes.

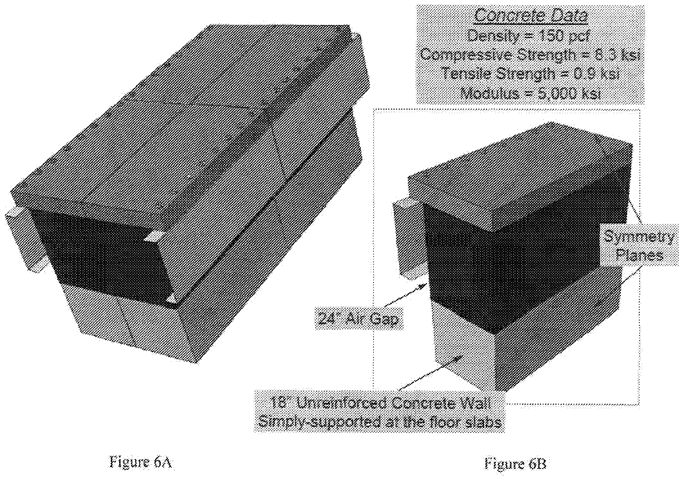

Figures 6A and 6B illustrate a laminate and concrete wall quarter-symmetry model. The quarter symmetry model includes a 24 inch air gap to transfer the blast pressure from the laminate to the 18 inch (0.475 m) unreinforced concrete wall.

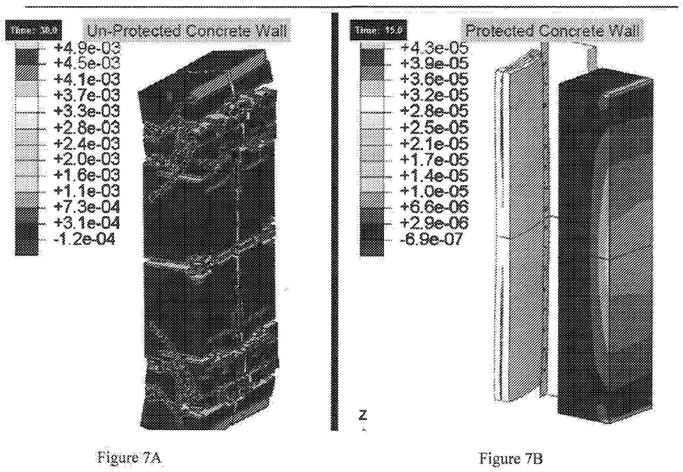

Figures 7A and 7B provide a comparison of subjecting an 18 inch (0.475 m) unreinforced concrete wall to a simulated 50 lbs. (22.7 kg) of trinitrotoluene-equivalent detonated at a distance of five feet (1.52 m). Figure 7A shows an unprotected wall and Figure 7B shows a wall protected by a three polycarbonate sheet laminate having one thermoplastic polyurethane layer between the each of the polycarbonate sheets, with a 24 inch (0.61 m) air gap. As can be appreciated by reference to Figures 7A and 7B, the unprotected concrete wall is predicted to crack catastrophically, whereas, the protected wall is predicted to not crack.

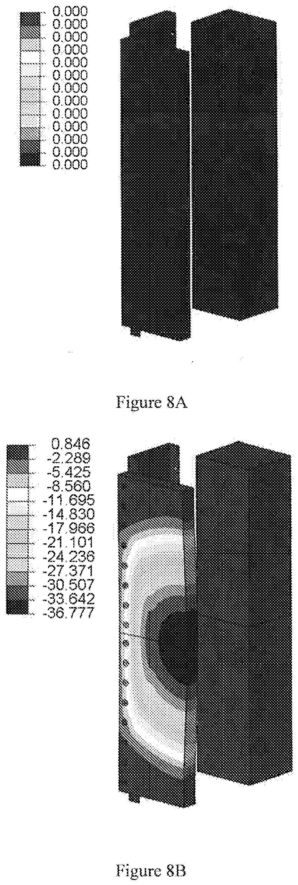

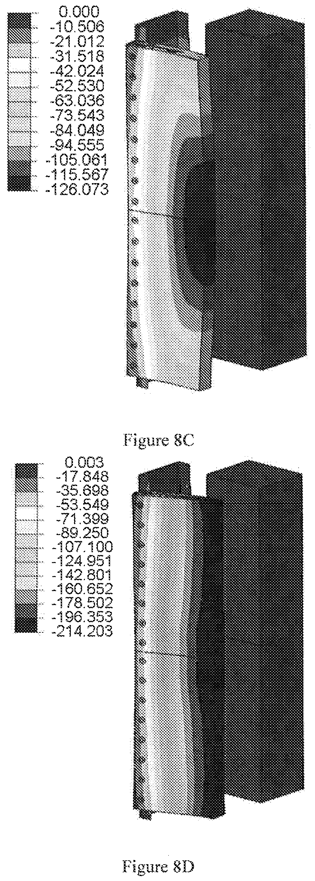

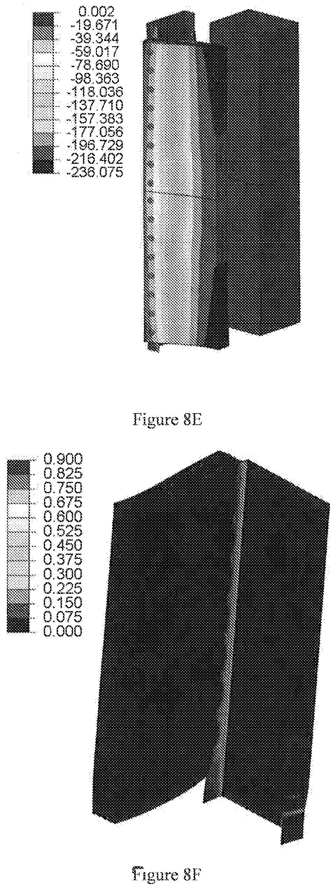

Figures 8A-8F illustrate the deflection prediction for the wall protected by a three polycarbonate sheet laminate having one thermoplastic polyurethane layer between the each of the polycarbonate sheets, with a 24 inch (0.61 m) air gap. Figure 8A shows no deflection prior to the detonation. Figure 8B shows deflection at one millisecond after detonation, Figure 8C at three milliseconds, Figure 8D at six milliseconds and Figure 8E at ten milliseconds. As can be appreciated by reference to Figures 8A-8E, the laminate is predicted to undergo large deflection of 240 mm and only sustain minor cracking (Figure 8F) with no failure of the I-beam.

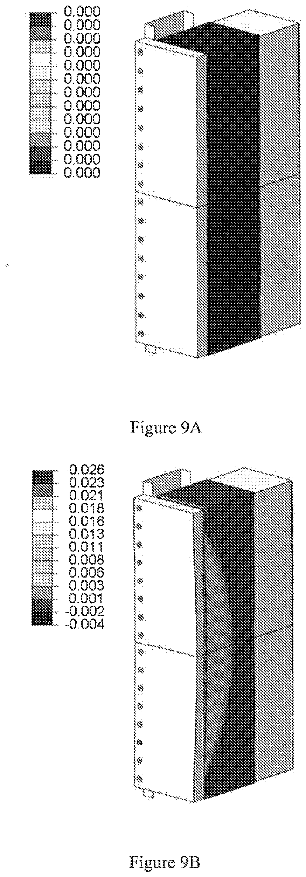

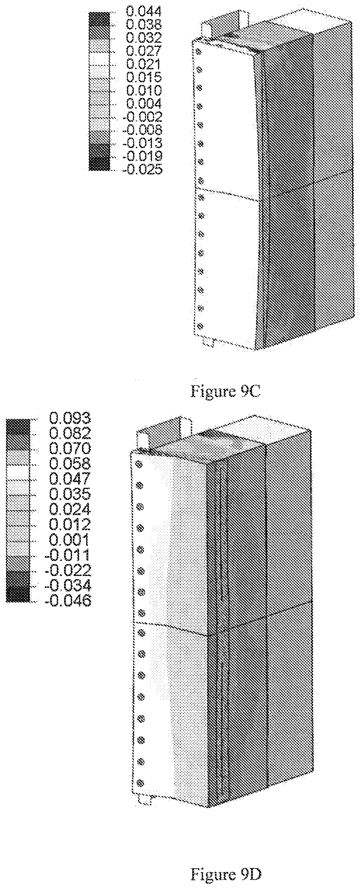

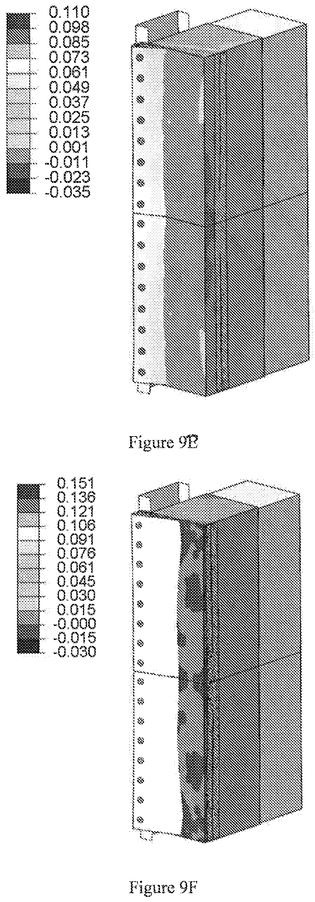

Figures 9A-9F illustrate the air gap pressure for a wall protected by a three polycarbonate sheet laminate having one thermoplastic polyurethane layer between the each of the polycarbonate sheets, with a 24 inch (0.61 m) air gap. Figure 9A shows the wall and laminate prior to the detonation. Figure 9B shows air gap pressure at one millisecond after detonation, Figure 9C at three milliseconds, Figure 9D at six milliseconds, Figure 9E at nine milliseconds and Figure 9F at 15 milliseconds after detonation. The air pressure at the interface with the concrete wall reaches a maximum value of 9 psi (62.1 kPa) shown in Figure 9E.

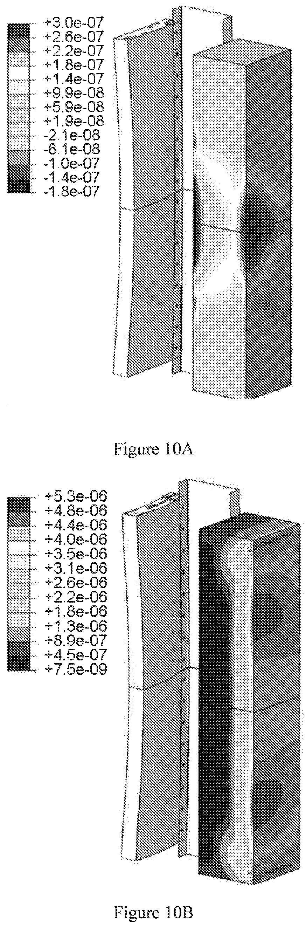

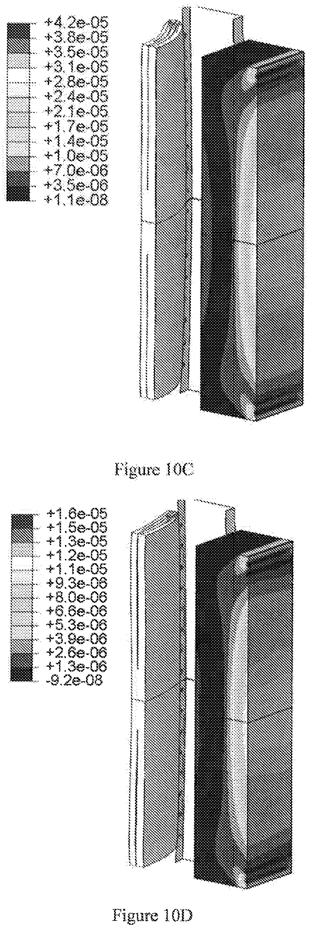

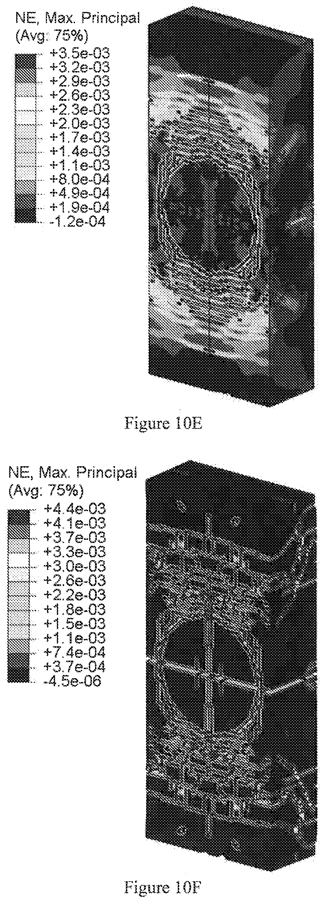

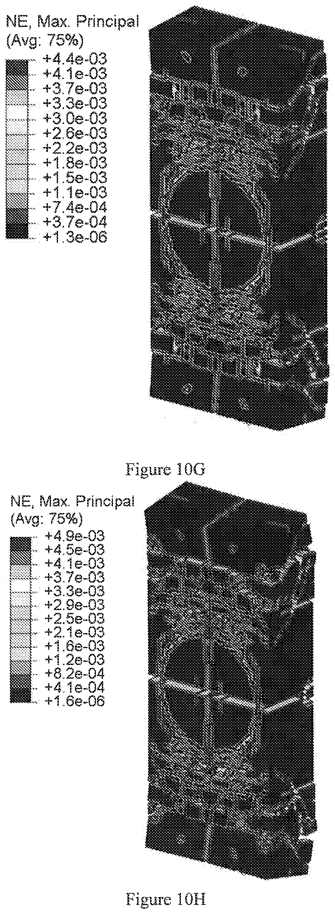

Figures 10A-10H illustrate the concrete wall strain for a walls that are subjected to a simulated 50 lbs. (22.7 kg) of trinitrotoluene-equivalent detonated at a distance of five feet (1.52 m). Figures 10A-10D show a wall protected by a three polycarbonate sheet laminate having one thermoplastic polyurethane layer between the each of the polycarbonate sheets, with a 24 inch (0.61 m) air gap with Figure 10A at two milliseconds after detonation, Figure 10B at three milliseconds, Figure 10C at seven milliseconds and Figure 10D at 15 milliseconds. Similarly, Figures 10E-10H show an unprotected wall exposed to the same detonation with Figure 10E at two milliseconds after detonation, Figure 10F at three milliseconds, Figure 10G at seven milliseconds and Figure 10H at 15 milliseconds. As can be appreciated by reference to Figures 10A-H, the strain predicted in the protected concrete wall is significantly lower by orders of magnitude compared to the unprotected concrete wall. There were no cracks in the protected concrete wall at 15 milliseconds following detonation whereas the unprotected wall is predicted to have significant damage.

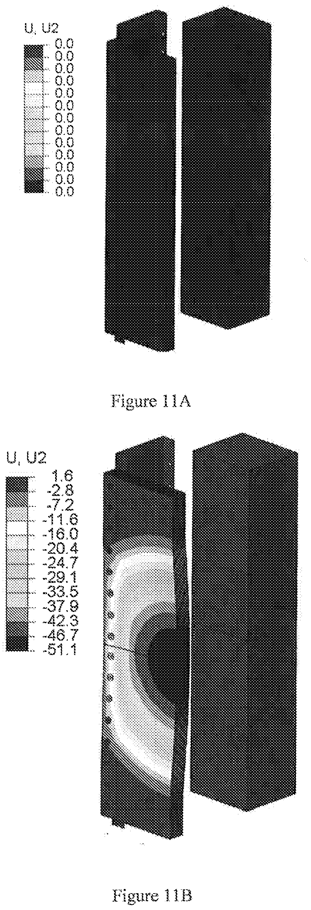

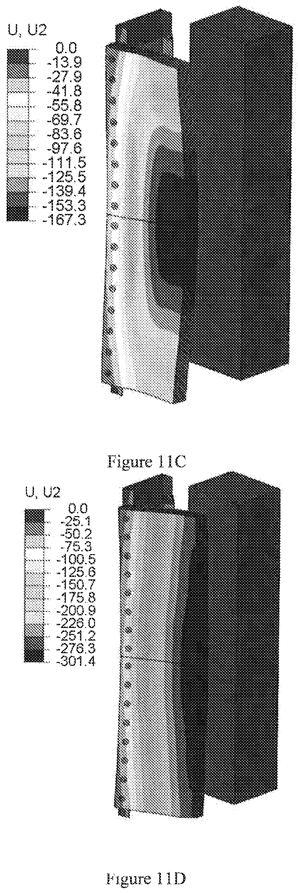

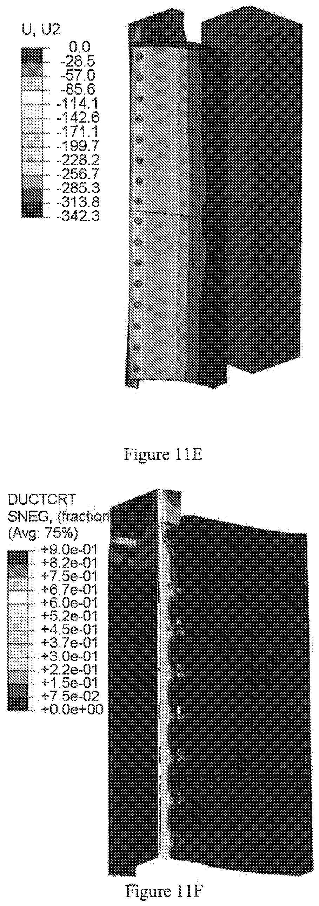

Figures 11A-11F illustrate subjecting an 18 inch (0.475 m) unreinforced concrete wall to a simulated 50 lbs. (22.7 kg) of trinitrotoluene-equivalent detonated at a distance of 4 feet (1.22 m), with the wall protected by a three polycarbonate sheet laminate having one thermoplastic polyurethane layer between the each of the polycarbonate sheets, and a 24 inch (0.61 m) air gap between the laminate and the wall. Figure 11A shows the wall and laminate prior to the detonation. Figure 11B shows deflection prediction at one millisecond after detonation, Figure 11C at three milliseconds, Figure 11D at six milliseconds and Figure 11E at ten milliseconds. As can be appreciated by reference to Figure 11A-E, the laminate is predicted to undergo a larger deflection of 340 mm and sustain increased cracking of the laminate and metal column. The panel and column remain intact and do not become projectiles, but are compromised (Figure 11F) as the inner polycarbonate layer fails as does the I-beam.

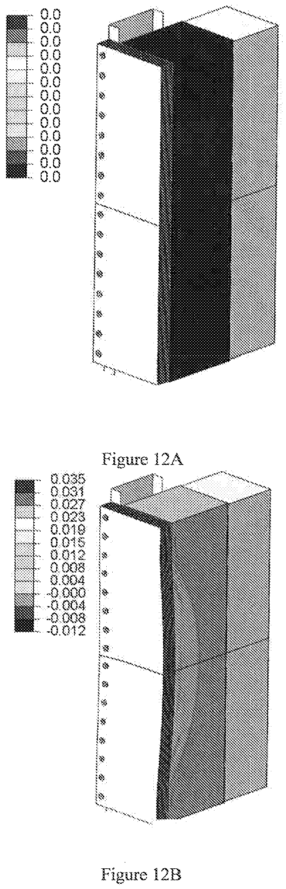

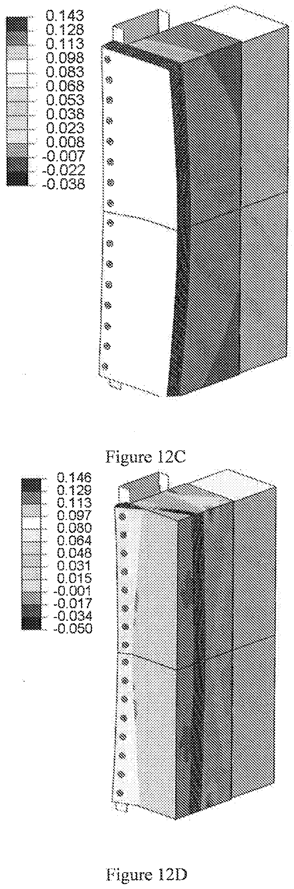

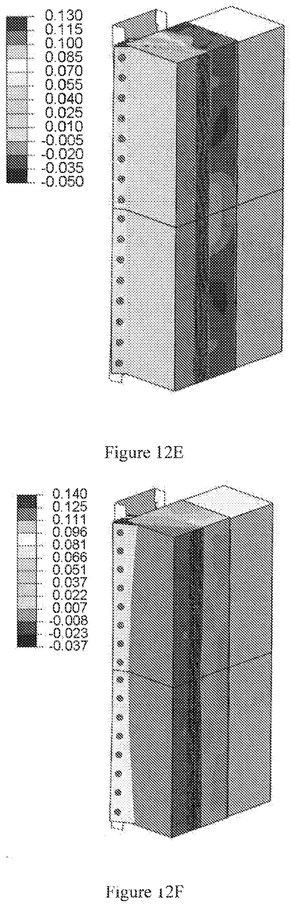

Figures 12A-12F illustrate the air gap pressure for the wall protected by a three polycarbonate sheet laminate having one thermoplastic polyurethane layer between the each of the polycarbonate sheets, and a 24 inch (0.61 m) air gap between the laminate and the wall. Figure 12A shows the wall and laminate prior to the detonation. Figure 12B shows air gap pressure at one millisecond after detonation, Figure 12C at two milliseconds, Figure 12D at six milliseconds, Figure 12E at 12 milliseconds and Figure 12F at 15 milliseconds after detonation. The air pressure at the interface with the concrete wall reaches a maximum value of 19 psi (131 kPa) shown in Figure 12E.

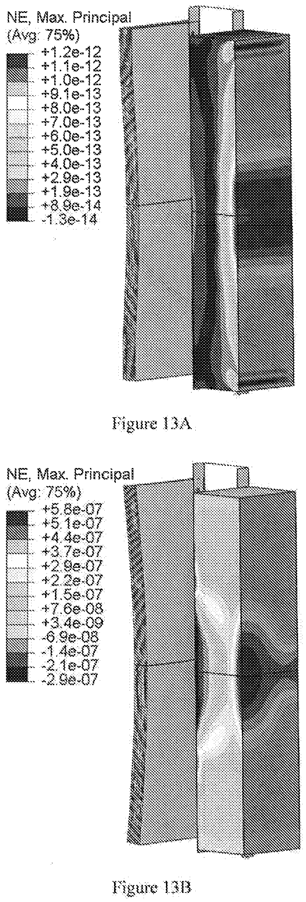

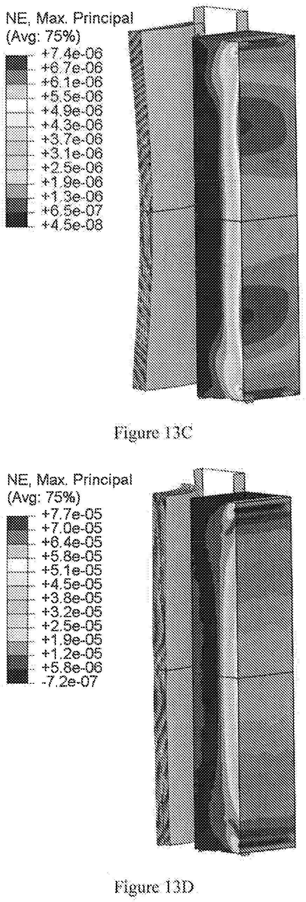

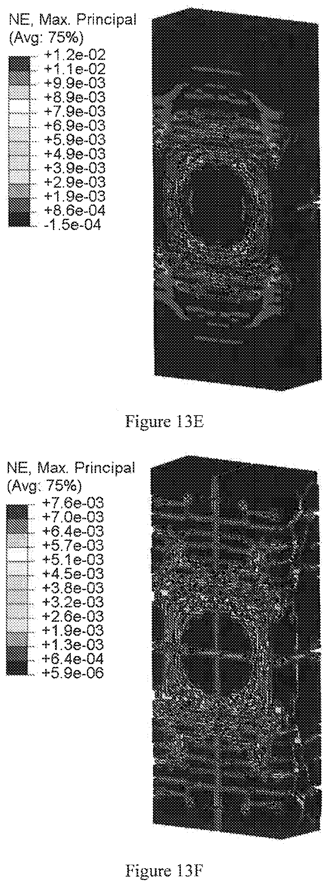

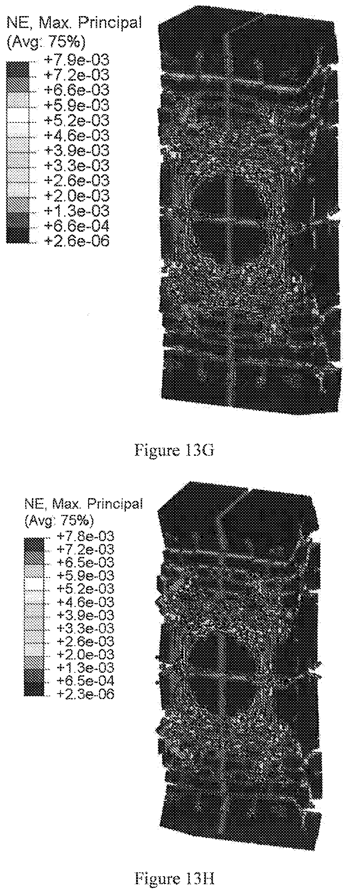

Figures 13A-13D illustrate the concrete wall strain for an 18 inch (0.475 m) unreinforced concrete wall that is subjected to a simulated 50 lbs. (22.7 kg) of trinitrotoluene-equivalent detonated at a distance of 4 feet (1.22 m), with the wall protected by a three polycarbonate sheet laminate having one thermoplastic polyurethane layer between the each of the polycarbonate sheets, and a 24 inch (0.61 m) air gap. Concrete wall strain for a comparable unprotected wall is shown in Figures 13E-13H. Figures 13A-13D show the wall protected by the inventive laminate with Figure 13A at one millisecond after detonation, Figure 13B at two milliseconds, Figure 13C at three milliseconds and Figure 13D at ten milliseconds. Similarly, Figures 13E-13H show an unprotected wall exposed to the same detonation with Figure 13E at one millisecond after detonation, Figure 13F at two milliseconds, Figure 13G at three milliseconds and Figure 13H at ten milliseconds. As can be appreciated by reference to Figures 13A-H, the strain predicted in the protected concrete wall is significantly lower by orders of magnitude compared to the unprotected concrete wall. There were no cracks in the protected concrete wall at ten milliseconds following detonation whereas the unprotected wall is predicted to have significant damage.

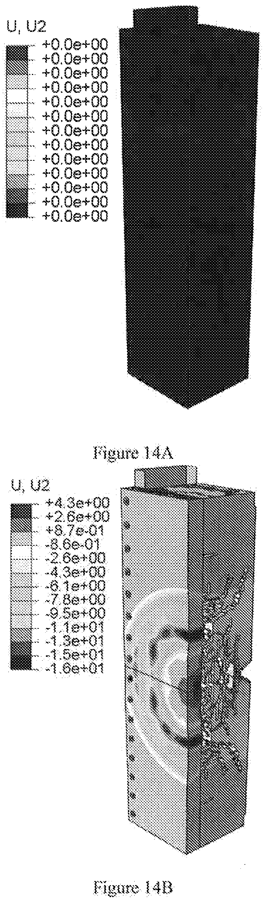

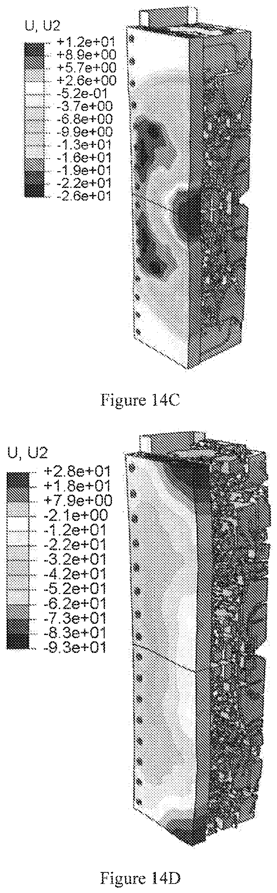

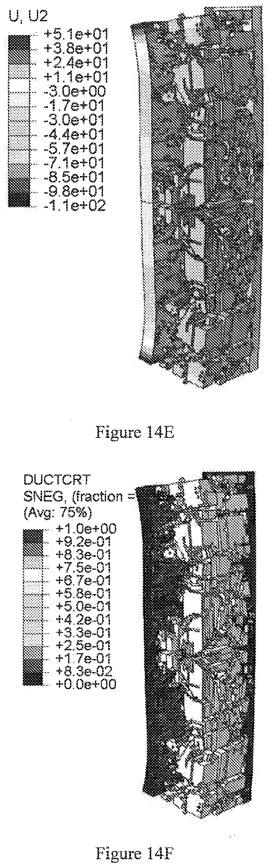

Figures 14A-14F show the deflection prediction of subjecting an 18 inch (0.475 m) unreinforced concrete wall to a simulated 50 lbs. (22.7 kg) of trinitrotoluene-equivalent detonated at a distance of three feet (0.914 m), with the wall protected by a three polycarbonate sheet laminate having one thermoplastic polyurethane layer between the each of the polycarbonate sheets and no air gap. Figure 14A shows no deflection prior to the detonation. Figure 14B shows deflection at 0.7 milliseconds after detonation, Figure 14C at 1.3 milliseconds and Figure 14D at four milliseconds. As can be appreciated by reference to Figures 14E and 14F, in the absence of an air gap, the inventive laminate is not able to absorb as much blast energy and is therefore predicted to not be an effective solution.

The results of these examples are summarized below in Table I. As can be appreciated by reference to Table I, the laminate is predicted to be effective against a 50 lbs. (22.7 kg) charge of trinitrotoluene-equivalent as close as 4 feet (1.22 m) before significant damage is seen in the concrete wall. Additional studies (data not reported here) have shown the laminate to be effective against 100 lbs. (45.4 kg) of trinitrotoluene-equivalent from 5 feet (1.52 m).

**Table I**

| **Ex.** | **TNT equivalent mass lbs. (kg)** | **Standoff ft. (m)** | **Pressure psi (MPa)** | **td (msec)** | **Laminate with air gap** | **Laminate without air gap** |
|---|---|---|---|---|---|---|
| 1 | 50 (22.7) | 2 (0.61) | 24062 (166) | 0.32 | Flange/bolt tear out | |
| 2 | 50 (22.7) | 3 (0.914) | 12425 (85.7) | 0.31 | Beam flange failure | Laminate pass/ concrete wall fail |
| 3 | 50 (22.7) | 4 (1.22) | 7546 (52) | 0.32 | Hole failure inner PC/ concrete wall pass | Laminate pass/ concrete wall fail |
| 4 | 50 (22.7) | 5 (1.52) | 4964 (34.2) | 0.35 | Laminate pass/ concrete wall pass | Laminate pass/ concrete wall fail |

The present inventors contemplate that the laminate of the present invention is well suited for providing protection from close-proximity blast, severe storm events, such as hurricanes, cyclones, typhoons and tornados.

The foregoing examples of the present invention are offered for the purpose of illustration and not limitation. The scope of the invention is to be measured by the appended claims.

## Claims

1. A laminate for protecting an object against one of a close proximity blast find a severe storm event, the laminate comprising two or more
layers of polycarbonate having layered therebetween one or more layers of a thermoplastic polyurethane,
wherein the laminate is about 4 inches (10,2 cm) to about 6 inches (15.2 cm) in thickness.

2. The laminate according to Claim 1, wherein the polycarbonates is in the form of sheets.

3. The laminate according to one of Claims 1 and 2, wherein the thermoplastic polyurethanes is in the form of films.

4. The laminate according to one of Claims 1 to 3, wherein the laminate is at a standoff from about 2 feet (0.61 m) to about 4 feet (1.22 m) from the object.

5. The laminate according to one of the preceding Claims, wherein the laminate is about 4 inches (10.2 cm) to about 5 inches (12.7 cm) in thickness.

6. A method for protecting an object from one of a close proximity blast and a severe storm event, the method comprising placing between the object and the blast or storm event a laminate according to one of the preceding claims,
wherein the laminate is placed at a standoff of about 2 feet (0.61 m) to about 4 feet (1.22 m) from the object.

7. The method according to claim 6, wherein the impact is about 50 lbs. (22.7 kg) to about 100 lbs. (45.4 kg) of trinitrotoluene-equivalent detonated at a distance of about 3 feet (0.914 m).

## Patentansprüche

1. Laminat zum Schützen eines Objekts vor einer Explosion in unmittelbarer Nähe und einem schweren Sturmereignis, wobei das Laminat zwei oder mehr Schichten aus Polycarbonat umfasst, die dazwischen eine oder mehrere Schichten aus einem thermoplastischen Polyurethan geschichtet aufweisen,
wobei das Laminat eine Dicke von etwa 4 Inch (10,2 cm) bis etwa 6 Inch (15,2 cm) aufweist.

2. Laminat nach Anspruch 1, wobei das Polycarbonat in Form von Platten vorliegt.

3. Laminat nach einem der Ansprüche 1 und 2, wobei das thermoplastische Polyurethan in Form eines Films vorliegt.

4. Laminat nach einem der Ansprüche 1 bis 3, wobei sich das Laminat in einem Abstand von etwa 2 Fuß (0,61 m) bis etwa 4 Fuß (1,22 m) von dem Objekt befindet.

5. Laminat nach einem der vorhergehenden Ansprüche, wobei das Laminat eine Dicke von etwa 4 Inch (10,2 cm) bis etwa 5 Inch (12,7 cm) aufweist.

6. Verfahren zum Schützen eines Objekts vor einer Explosion in unmittelbarer Nähe und einem schweren Sturmereignis, wobei das Verfahren das Anordnen eines Laminats nach einem der vorhergehenden Ansprüche zwischen dem Objekt und der Explosion oder dem Sturmereignis umfasst,
wobei das Laminat in einem Abstand von etwa 2 Fuß (0,61 m) bis etwa 4 Fuß (1,22 m) von dem Objekt angeordnet wird.

7. Verfahren nach Anspruch 6, wobei der Stoß etwa 50 lbs (22,7 kg) bis etwa 100 lbs (45,4 kg) Trinitrotoluol-Äquivalent beträgt, das in einem Abstand von etwa 3 Fuß (0,914 m) detoniert wird.

## Revendications

1. Stratifié conçu pour la protection d'un objet contre l'un d'une explosion à proximité immédiate et d'un événement de forte tempête, le stratifié comprenant deux ou plusieurs couches de polycarbonate entre lesquelles sont stratifiées une ou plusieurs couches d'un polyuréthane thermoplastique,
le stratifié mesurant environ 4 pouces (10,2 cm) à environ 6 pouces (15,2 cm) d'épaisseur.

2. Stratifié selon la revendication 1, dans lequel le polycarbonate est sous forme de feuilles.

3. Stratifié selon l'une des revendications 1 et 2, dans lequel le polyuréthane thermoplastique est sous forme de film.

4. Stratifié selon l'une des revendications 1 à 3, le stratifié se trouvant à une distance d'environ 2 pieds (0,61 m) à environ 4 pieds (1,22 m) de l'objet.

5. Stratifié selon l'une des revendications précédentes, le stratifié mesurant environ 4 pouces (10,2 cm) à environ 5 pouces (12,7 cm) d'épaisseur.

6. Procédé de protection d'un objet contre l'un d'une explosion à proximité immédiate et d'un événement de forte tempête, le procédé comprenant la mise en place, entre l'objet et l'explosion ou l'événement de tempête, d'un stratifié selon l'une des revendications précédentes,
dans lequel le stratifié est placé à une distance d'environ 2 pieds (0,61 m) à environ 4 pieds (1,22 m) de l'objet.

7. Procédé selon la revendication 6, dans lequel l'impact est d'environ 50 livres (22,7 kg) à environ 100 livres (45,4 kg) d'équivalent de trinitrotoluène explosant à une distance d'environ 3 pieds (0,914 m).
